Europäisches Patentamt

European Patent Office

Office européen des brevets

(19)

(11) Publication number: **0 392 741**
**A2**

# EUROPEAN PATENT APPLICATION

(12)

(21) Application number: **90303652.3**

(22) Date of filing: **05.04.90**

(51) Int. Cl.5: **G02B 6/42**

(30) Priority: **08.04.89 GB 8907966**

(43) Date of publication of application:
**17.10.90 Bulletin 90/42**

(84) Designated Contracting States:
**DE FR GB**

(71) Applicant: **OXLEY DEVELOPMENTS CO., LTD.**
**Priory Park**
**Ulverston Cumbria LA12 9QG(GB)**

(72) Inventor: **Edwards Geoffrey Stephen**
**Bankfield, Jack Hill, Allithwaite**
**Grange-Over-Sands, Cumbria, LA11 7QB(GB)**
Inventor: **Logan, Phillip Malcolm**
**11 Spring Vale, Swarthmoor**
**Ulverston, Cumbria, LA12 OXA(GB)**

(74) Representative: **Huntingford, David Ian et al**
**W.P. THOMPSON & CO. Coopers Building**
**Church Street**
**Liverpool L1 3AB(GB)**

(54) Fibre optic/LED coupling.

(57) A fibre optic/LED coupling is disclosed in which the light-collecting end of a fibre optic (15) extends into the integral lens (10) of an LED (12) whereby to increase the amount of light collected from the LED chip (16). This is achieved by forming a blind hole (14) in the LED lens (10) into which the light-collecting end of the fibre optic (15) is inserted.

Fig. 1

EP 0 392 741 A2

## FIBRE OPTIC/LED COUPLING

The present invention is concerned with the mutual coupling of fibre optics and LEDs and, in particular, with the problem of conveniently and efficiently collecting light from an encapsulated light emitting diode and distributing it to a desired display location by way of a fibre optic.

In conventional arrangements, the end of a fibre optic is placed close to or in abuttment with the integral lens (normally epoxy) which encapsulates an LED. It is an object of the present invention to improve upon this arrangement.

In accordance with the present invention, the light-collecting end of the fibre optic extends into the integral lens of the LED whereby to increase the amount of light collected from the LED chip.

Preferably, this is achieved by forming a blind hole in the LED lens into which the light-collecting end of the fibre optic is inserted.

Where the fibre optic has an outer coating of low refractive glass or plastic which traps light in the fibre by total internal reflection there can be disposed in the base of the blind hole, i.e. between the base of the blind hole and the light-collecting end of the fibre optic, an adhesive which is arranged to match the refractive index of the LED encapsulation and the inner core of the fibre optic so that light from the LED which is at approximately normal incidence to the end of the fibre does not suffer transmission losses.

Where the fibre optic is simply a uniform plastics rod, there can be disposed in the base of the blind hole a first adhesive which is arranged to match the LED encapsulation with the plastics rod and there can be disposed between the cylindrical periphery of the plastics rod and the side wall of the blind hole a second adhesive having a lower refractive index than the plastics rod which traps light inside the plastics rod during its passage out of the LED encapsulation.

The invention is described further hereinafter, by way of example only, with reference to the accompanying drawings, in which:-

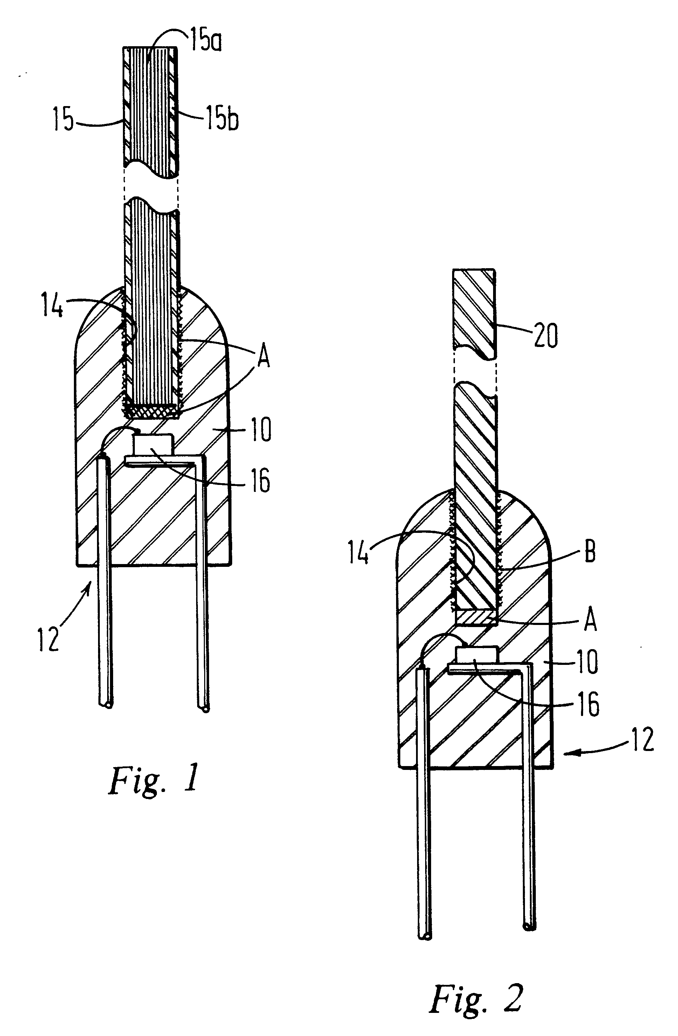

Figs. 1 and 2 are diagrammatic sectional views of first and second embodiments in accordance with the present invention.

Fig.1 shows a first embodiment which operates with a fibre optic 15 having an outer coating 15b of low refractive index glass or plastic and in which the epoxy encapsulation forming the lens 10 of an LED 12 is provided with a blind bore 14 simply by drilling into the end of the encapsulation 10 and terminating the bore adjacent the LED chip 16 itself. Collection of the available light is enhanced by the use of an adhesive (A) which matches the refractive index of the LED encapsulation and the inner core 15a of the fibre 15 so that the light from the LED which is at approximately normal incidence to the end of the fibre does not suffer transmission losses. Because of the use of the matched refractive index adhesive A, the bore 10 can be made using an ordinary drill, the drill angle and scratches at the end of the bore being made to "optically disappear" as a result of the matched refractive index adhesive.

Turning now to the embodiment of Fig.2, an alternative method of guiding light to the use of the fibre optic 15 with its coating 15b of low RI glass is to use the air/plastic interface on a flexible light guide in the form of a simple plastics rod 20. If the surfaces of the rod 20 are made and maintained without imperfections/scratches, then transmission losses are low enough for short distance light guiding applications.

In using such a light guide 20 with the LED as shown in Fig.2, two matched adhesives are required, the first (A) as with the fibre optic of Fig.1 being arranged to match the LED encapsulation with the light guide 20 and the second (B) being an adhesive with a lower refractive index (than the light guide 20) which traps light inside the light guide during its transmission out of the LED encapsulation 10.

Outside the encapsulation 10, the air of course provides the low refractive index medium to trap the light inside the light guide 20.

It should be noted that in both Fig.1 and Fig.2, the LED encapsulation 10 which originally acted as a lens for light from the LED (and to ensure that light more efficiently leaves the LED chip, e.g. GaAsP, because of the high rafractive index of the encapsulation) when it has been adapted in accordance with the invention, only functions to provide the latter optical matching function (and, of course, as a support for the fibre optic/light guide) and not as a lens.

On leaving the fibre optic/light guide (15;20), the light can be directed as required onto a diffusing screen or through a lens etc. in a conventional manner.

## Claims

1. A fibre optic/LED coupling characterise in that the light-collecting end of a fibre optic (15) extends into the integral lens (10) of an LED (12) whereby to increase the amount of light collected from the LED chip (16).

2. A fibre optic/LED coupling as claimed in claim 1, wherein a blind hole (14) is formed in the LED lens (10), into which the light-collecting end of the fibre optic (15) is inserted.

3. A fibre optic/LED coupling as claimed in claim 1, in which the fibre optic (15) is of the type having an outer coating (15b) of low refractive glass or plastics which traps light in the fibre by total internal reflection, there being disposed in the base of the blind hole (14), between the base of the blind hole and the light-collecting end of the fibre optic (15), an adhesive (A) which is arranged to match the refractive index of the LED encapsulation and the inner core of the fibre optic so that light from the LED which is at approximately normal incidence to the end of the fibre does not suffer transmission losses.

4. A fibre optic/LED coupling as claimed in claim 1, in which the fibre optic (15) is in the form of a uniform plastics rod (20), there being disposed in the base of the blind hole (14) a first adhesive (A) which is arranged to match the LED encapsulation (10) with the plastics rod (20) and there being disposed between the cylindrical periphery of the plastics rod and the side wall of the blind hole a second adhesive (B) having a lower refractive index than the plastics rod (20) which traps light inside the plastics rod (20) during its passage out of the LED encapsulation.

Fig. 1

Fig. 2